# FASCICULE DE BREVET EUROPEEN

(11) **EP 2 625 830 B1**
(45) Date de publication et mention de la délivrance du brevet: **31.07.2019**
(21) Numéro de dépôt: 11779814.0
(22) Date de dépôt: 07.10.2011
(51) Int. Cl.: H04L 12/58, H04L 29/08, H04L 29/06

(54) **PROCÉDÉ ET DISPOSITIF DE TRANSFERT SÉCURISÉ DE DONNÉES**
VERFAHREN UND VORRICHTUNG FÜR SICHEREN DATENTRANSFER
METHOD AND DEVICE FOR THE SECURE TRANSFER OF DATA

(30) Priorité: 07.10.2010 FR 1058134
(43) Date de publication de la demande: 14.08.2013
(73) Titulaire: Electricité de France, 75008 Paris (FR)
(72) Inventeur: TARRAGO, Arnaud, F-75014 Paris (FR); SITBON, Pascal, F-92320 Chatillon (FR); NGUYEN, Pierre, F-92120 Montrouge (FR)
(74) Mandataire: Cabinet Plasseraud
(86) Numéro de dépôt international: PCT/FR2011/052344
(87) Numéro de publication internationale: WO 2012/045984

(56) Documents cités:
- WO-A1-97/12321
- WO-A1-2010/076514
- US-A- 5 878 231

## Description

L'invention concerne le domaine de la transmission sécurisée de données, en particulier dans les systèmes informatisés nécessitant un haut niveau de sécurité.

La protection des réseaux de données est actuellement assurée par des dispositifs dont la sécurité repose sur leur sûreté d'implémentation et la bonne maîtrise des protocoles de communication. C'est le cas notamment des dispositifs « coupe-feu », des relais applicatifs ou des produits segmentant les réseaux (comme les produits VLAN, ou de norme 802.1Q), ainsi que des systèmes de détection et de prévention d'intrusion.

Plusieurs types d'architectures de sécurité peuvent exister. Dans les architectures très sécurisées, les interconnexions réseaux sont prohibées. Les échanges se font à l'aide d'éléments physiques qui ne sont rattachées qu'à un seul système à la fois. Des dispositifs d'échange à un seul sens de communication existent mais leur fiabilité est limitée du fait du manque de flux de contrôle d'échange, et ils ne sont pas forcément utilisés dans le sens allant du système le moins sensible en termes de sécurité vers le système le plus sensible en termes de sécurité. C'est le cas des dispositifs à « diodes physiques » basés, pour la plupart, sur des technologies fibres optiques.

Il est habituel d'implémenter une architecture d'échange « idéale » par l'intermédiaire de coupe-feux successifs délimitant une zone d'échange externe, une zone d'échange interne de premier niveau de confidentialité et une zone d'échange interne de deuxième niveau de confidentialité gérées respectivement par des serveurs dédiés. La multiplication de ces zones d'échange permet de rendre plus complexe la tâche d'un éventuel tiers malintentionné voulant accéder à, voire corrompre, certaines données d'un système informatique.

Cependant, de nombreuses failles logicielles ont été révélées dans ce type d'architectures, entraînant alors la compromission du réseau qu'ils étaient censés protéger. Les architectures d'échange « idéales » ont, par exemple, été sensibles à des attaques sur les applications utilisant les technologies web

Indépendamment de ce problème de sûreté logicielle, une mauvaise application de la politique de sécurité d'une entreprise ou une erreur dans la configuration de tels dispositifs peuvent compromettre la sécurité du réseau entier. Ces erreurs nécessitent donc une surveillance et des procédures d'audits et de mise à niveau permanents de tels dispositifs.

Une première solution à ces problèmes a été proposée dans la demande française FR 08 58790. Dans cette demande, l'invention consiste à transférer des données de façon sécurisée, aux moyens de simples commandes de type lecture ou écriture, par l'intermédiaire de moyens figés physiquement ainsi que d'un espace de stockage central intermédiaire, afin d'éviter la prise de contrôle d'un système connecté à l'un des ports d'accès du système de transfert sécurisé au moyen d'un système connecté à un autre des ports d'accès de ce même système de transfert sécurisé.

Un dispositif utilisant une telle solution présente cependant l'inconvénient de dépendre des systèmes qui lui sont connectés quant à la fin de l'écriture d'un fichier. Si un tel dispositif commence plusieurs écritures de fichiers en parallèle, ce dispositif est alors obligé de maintenir autant de tables de description qu'il y a de fichiers en cours d'écriture, ce qui se traduit par une consommation inutile de ressources.

De plus, dans une implémentation par défaut d'un dispositif selon cette invention, l'élément de stockage central d'un tel dispositif ne sait pas forcément quand le fichier numérique transféré a fini d'être transmis, ce qui peut gêner le déplacement de ce fichier dans cet élément à moins de recourir à une implémentation particulière de ce système, ce qui complexifie encore plus cette solution.

Le document US5878231 divulgue un système pour le filtrage de paquets dans un réseau de communication. Les paquets sont fragmentés et inspectés avant qu'ils soient acheminés vers leur destination, sont bloqués ou une action est prise sur les paquets avant qu'ils soient envoyés.

Il existe donc, dans les solutions de l'art antérieur, un problème de gestion des fichiers à transférer auquel il convient de remédier.

La présente invention vient améliorer cette situation.

Elle propose à cet effet un procédé de transfert sécurisé d'un fichier numérique provenant d'un premier système informatisé vers au moins un deuxième système informatisé à travers un dispositif de transfert sécurisé en accord avec le procédé de la revendication 1.

La présente invention propose en outre un dispositif de transfert sécurisé de données, apte à être connecté à un premier système informatisé et un deuxième système informatisé en accord avec la revendication de dispositif 6.

Le procédé et le dispositif de transfert sécurisé, objets de l'invention, seront mieux compris à la lecture de la description et à l'observation des dessins ci-après dans lesquels :
- la figure 1 est un schéma synoptique illustrant un dispositif de transfert sécurisé de données selon le principe de la présente invention ;
- la figure 2 illustre les étapes d'un procédé de transfert sécurisé de données selon le principe de la présente invention ;
- la figure 3A illustre les étapes d'un procédé de transfert sécurisé de données selon un premier mode de réalisation de la présente invention ;
- la figure 3B illustre les étapes d'un procédé de transfert sécurisé de données selon une variante du premier mode de réalisation de la présente invention ;
- la figure 4A illustre les étapes d'un procédé de transfert sécurisé de données selon un deuxième mode de réalisation de la présente invention ;
- la figure 4B illustre les étapes d'un procédé de transfert sécurisé de données selon une variante du deuxième mode de réalisation de la présente invention ;
- la figure 5A est un schéma synoptique illustrant un dispositif de transfert sécurisé de données selon un autre mode de réalisation de la présente invention ; et
- la figure 5B illustre les étapes d'un procédé de transfert sécurisé de données selon un troisième mode de réalisation de la présente invention.

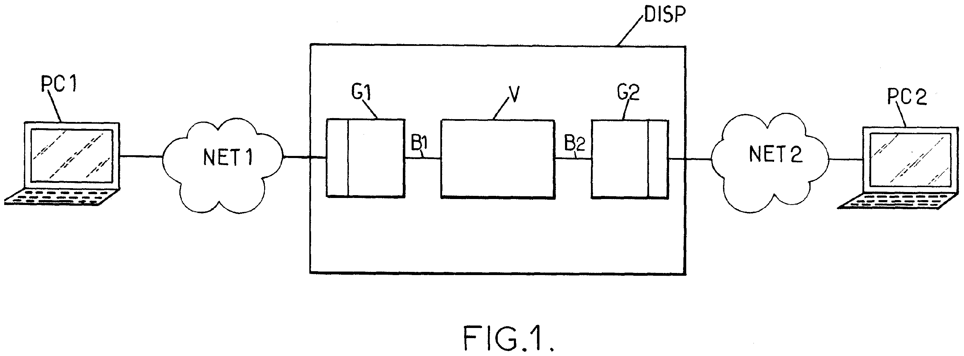

On se réfère tout d'abord à la **figure 1** sur laquelle est illustré schématiquement le dispositif de transfert sécurisé DISP selon le principe de la présente invention.

Le dispositif de transfert sécurisé DISP est connecté, d'une part, à un premier système informatisé PC1 par l'intermédiaire d'un premier réseau NET1 et, d'autre part, à un deuxième système informatisé PC2 par l'intermédiaire d'un deuxième réseau NET2, afin de permettre l'échange sécurisé de données entre ces deux systèmes informatisés.

On entend ici par système informatisé tout type de système informatique apte à lire ou écrire un fichier numérique par le biais d'une interface réseau, comme par exemple un ordinateur personnel, un serveur, un smartphone, un automate industriel, un capteur, un actionneur ou tout autre objet communicant.

De même, on entend ici par réseau tout type d'architecture permettant de connecter physiquement des systèmes informatisés entre eux, comme par exemple un réseau local de type Ethernet, un réseau sans fil, le réseau Internet ou tout autre type d'attachement physique.

Le dispositif de transfert sécurisé DISP comporte tout d'abord un premier module de gestion de fichiers G1 apte à stocker un fichier numérique F reçu du premier système informatisé PC1.

Pour ce faire, le premier module de gestion de fichiers G1 comporte un moyen de stockage permettant la mémorisation du fichier numérique F déposé à partir du premier système informatisé PC1. Un tel moyen de stockage peut consister par exemple en un disque dur ou une mémoire flash.

Le premier module de gestion de fichiers G1 comprend par ailleurs une interface réseau, connectée au premier réseau NET1 relié au premier système informatisé PC1, qui permet la connexion à distance avec ce premier système informatisé PC1 afin d'en recevoir le fichier numérique F. Une telle interface réseau peut être de type FTP ou HTTP, par exemple.

Le premier module de gestion de fichiers G1 comprend en outre un module de traitement permettant de gérer la façon dont les fichiers numériques sont déposés et organisés sur le moyen de stockage. Ainsi, en particulier, le moyen de traitement gère la file d'attente des fichiers à transférer et met en forme ces fichiers, par exemple en leur associant un marquage et en les divisant en une pluralité de paquets de données, avant de les transmettre de manière séquentielle vers le module de vérification du dispositif de transfert sécurisé.

Grâce ce premier module de gestion de fichiers G1, la transmission en parallèle de fichiers numériques peut être contrôlée afin d'éviter la consommation inutile de ressources.

Un tel marquage peut correspondre à la conversion du fichier numérique dans un format spécifique et interne au dispositif, par exemple avec un en-tête indiquant la taille et le type de fichier.

Le module de traitement peut également gérer les fichiers stockés dans le premier module G1 au moyen d'un répertoire et les classer en fonction d'un paramètre tel que la date de dépôt du fichier sur le premier module G1 ou un ordre de priorité prédéterminé.

Le dispositif de transfert sécurisé DISP comporte par ailleurs un module de vérification V arrangé pour recevoir le fichier numérique F stocké sur le premier module de gestion de fichiers G1 et pour effectuer une vérification sur au moins une partie du fichier numérique reçu.

Cette vérification, et la modification éventuelle de type substitution ou suppression de certaines données numériques qui peut l'accompagner, peut porter sur l'ensemble du fichier numérique F ou, si celui est divisé en une pluralité de paquets Fᵢ au niveau du premier module de gestion de fichiers G1, sur un ou plusieurs de ces paquets transmis séquentiellement du premier module de gestion de fichiers G1 au module de vérification V, en fonction du type de vérification employé. En particulier, cette vérification peut être faite à la volée, en temps réel, sur des paquets individuels Fᵢ, sur des lignes du fichier numérique F recomposées à partir de différents paquets Fᵢ, ou bien sur le fichier numérique F recomposé à partir de tous les paquets Fᵢ.

Au cours de cette vérification, divers paramètres peuvent être vérifiés tels que, par exemple, la taille des paquets Fᵢ transférés ou la syntaxe employée dans ces paquets, le type de caractères utilisés dans ces paquets ou la signature électronique apposée sur le fichier numérique F.

Afin de limiter au maximum les possibilités de prise de contrôle de ce module de vérification V par un élément extérieur, il est avantageux de figer physiquement les fonctionnalités de vérification du module de vérification, par exemple en implémentant ce module sous la forme d'un FPGA (pour Field Programmable Gate Array) pouvant être programmé par logiciel avant d'être figé physiquement.

Lorsque la vérification porte sur des ensembles de paquets individuels Fᵢ, par exemple correspondant à des lignes du fichier numérique F, ou bien sur le fichier numérique F en entier, le module de vérification V comporte également avantageusement une mémoire tampon, par exemple de type RAM, permettant de stocker temporairement les paquets Fᵢ reçus afin de reformer la ligne du fichier numérique à analyser, voire le fichier numérique F entier, à analyser. La taille de cette mémoire tampon dépend de la finesse de la vérification à effectuer.

Le dispositif de transfert sécurisé DISP comporte également un deuxième module de gestion de fichiers G2 apte à recevoir le fichier numérique du module de vérification, afin de permettre sa lecture par le deuxième système informatisé PC2 en fonction du résultat de la vérification effectuée dans le module de vérification V.

Ce deuxième module de gestion de fichiers G2 est similaire au premier module de gestion de fichiers G1 et comporte un moyen de stockage permettant la mémorisation du fichier numérique F, sous sa forme complète ou sous une forme décomposée en paquets Fᵢ, une fois qu'il a été vérifié par le module de vérification V, une interface réseau permettant la connexion au réseau NET2 relié au deuxième système informatisé PC2.

Le deuxième module de gestion de fichiers G2 peut comprendre en outre un module de traitement permettant de gérer la façon dont les fichiers numériques sont déposés et organisés sur le moyen de stockage du deuxième module de gestion G2, ainsi que la mise à disposition en lecture pour le deuxième système informatisé PC2.

Par exemple, si le fichier numérique F est décomposé dans le premier module de gestion G1 en une pluralité de paquets de données Fᵢ, lesquels sont ensuite vérifiés individuellement et séquentiellement par le module de vérification V, voire modifiés éventuellement par substitution ou suppression de certaines données numériques appartenant à certains des paquets de données Fᵢ, avant d'arriver séquentiellement dans le deuxième module de gestion G2, ce module de traitement sera apte à recomposer un fichier numérique F' sur le moyen de stockage du deuxième module de gestion G2, en rassemblant les paquets Fᵢ vérifiés, éventuellement modifiés par substitution ou suppression d'une partie de leurs données numériques, avant de donner l'accès en lecture à ce fichier recomposé au deuxième système informatisé PC2.

Il est ainsi possible de contrôler quand le fichier F transféré est mis à la disposition du deuxième système informatisé PC2, par exemple en le rendant accessible seulement lorsque le fichier F est complètement recomposé dans le module de gestion de fichiers G2, ce qui permet de répondre aux inconvénients apparaissant dans l'art antérieur.

Les modules de gestion de fichiers G1 et G2 sont respectivement connectés au module de vérification V du dispositif de transfert sécurisé DISP par le biais d'interfaces physiques B1 et B2, de type bus mémoire, ayant une taille limitée.

Dans un tel cas, il est avantageux de diviser le fichier numérique F à transmettre en une pluralité de paquets Fᵢ dont la taille est inférieure à une taille maximale de paquets de données pouvant transiter sur l'interface physique B1, déterminée en fonction de la taille limitée de l'interface physique B1. Ainsi, on peut par exemple former des paquets Fᵢ de 256 octets.

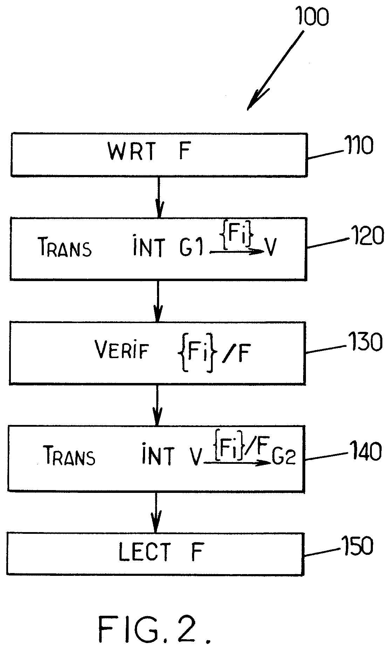

On se réfère maintenant à la **figure 2** qui illustre un procédé 100 de transfert sécurisé d'un fichier numérique F provenant d'un premier système informatisé PC1 vers au moins un deuxième système informatisé PC2 selon le principe de l'invention.

Le procédé 100 comprend tout d'abord une étape 110 d'écriture du fichier numérique F sur un premier module de gestion de fichiers G1 d'un dispositif de transfert sécurisé DISP, tel que par exemple celui décrit à la figure 1.

Suite au dépôt de ce fichier numérique F sur ce premier module de gestion de fichiers G1, le procédé 100 se poursuit par le transfert (étape 120) de ce fichier numérique F vers un module de vérification V interne au dispositif de transfert sécurisé DISP. Ce transfert peut se faire d'un seul tenant, ou par l'intermédiaire du transfert séquentiel d'une pluralité de paquets Fᵢ obtenus par décomposition du fichier numérique F dans le premier module de gestion de fichiers G1, selon le type de vérification effectuée, comme cela sera décrit plus en détail par la suite.

Le procédé 100 comporte alors une étape 130 de vérification d'au moins une partie du fichier numérique F transféré dans le module de vérification.

Ainsi, lorsque le fichier numérique F est transféré sous la forme d'un transfert séquentiel d'une pluralité de paquets Fᵢ obtenus par décomposition du fichier numérique F dans le premier module de gestion de fichiers G1, la vérification peut être de type « individuelle », c'est-à-dire effectuée individuellement sur un des paquets Fᵢ transférés, sur plusieurs des paquets Fᵢ transférés, voire séquentiellement sur l'ensemble des paquets Fᵢ transférés.

Dans un autre exemple où le fichier numérique F est transféré d'un seul tenant au module de vérification, la vérification peut être de type « globale », c'est-à-dire effectuée sur l'ensemble du fichier numérique F.

Le procédé 100 se poursuit alors par le transfert (étape 140) du fichier numérique F au moins partiellement vérifié, voire complètement vérifié, vers un deuxième module de gestion de fichiers G2 du dispositif de transfert sécurisé DISP en fonction du résultat de la vérification effectuée dans le module de vérification V, et ceci afin de permettre la lecture du fichier F par le deuxième système informatisé PC2 en fonction du résultat de cette vérification.

L'étape de transfert 140 peut porter sur le fichier numérique complet, ou se faire par transmission de paquets Fᵢ en fonction de la taille du bus physique reliant le module de vérification au deuxième module de gestion G2.

Ainsi, si toutes les opérations de vérification effectuée lors de l'étape 130 de vérification ont un résultat positif, le fichier numérique F se retrouve stocké dans le deuxième module de gestion de fichiers G2 et disponible en lecture pour le deuxième système informatisé PC2.

A l'inverse, si une ou plusieurs des opérations de vérification effectuée lors de l'étape 130 de vérification ont un résultat négatif, le transfert du fichier numérique F peut être interrompu avant qu'il ne soit disponible intégralement sur le deuxième module de gestion PC2, afin d'éviter que ce fichier numérique F ne soit mis à disposition du deuxième système informatisé PC2 s'il ne répond pas aux critères de vérification, afin de protéger le deuxième système informatisé PC2 de toute information potentiellement dangereuse ou inattendue.

De façon alternative, toujours si une ou plusieurs des opérations de vérification effectuée lors de l'étape 130 de vérification ont un résultat négatif, il est aussi possible de substituer à la partie du fichier numérique F ayant provoqué ce résultat négatif (par exemple à un paquet Fᵢ) des données de substitution présentant une forme bien précise et connue du deuxième système informatisé PC2, comme par exemple des caractères « _ » ou tout autre marqueur, composé de caractères spécifiques fixés au préalable, pouvant indiquer différents écarts par rapport aux critères de vérification.

Dans ce cas, le fichier numérique F sera bel et bien disponible, sous une forme modifiée F' de façon à indiquer qu'il ne présente plus de risque, sur le deuxième module de gestion G2, mais lorsqu'il sera lu par le deuxième système informatisé PC2, celui reconnaîtra que le fichier F a été modifié en un fichier F' et ne répond pas aux critères de vérification. Avantageusement, il peut même détecter le type d'écart constaté et donc quel critère de vérification n'est pas respecté par le fichier original F. Le système informatisé PC2 en déduit que le fichier original F ne présentait pas toutes les garanties en termes de sécurité en détectant la présence des données de substitution.

Ainsi, avec le procédé 100 de transfert de données sécurisé, le deuxième système informatisé PC2 a toujours accès au fichier numérique F dans son intégralité si la vérification de ce fichier numérique s'est bien déroulée, et si cette vérification a détecté un problème, le deuxième système informatisé PC2 n'a accès à aucun fichier numérique ou alors à un fichier numérique modifié F' dont au moins une partie a été substituée de façon connue.

Dans tous ces cas de figures possibles, le deuxième système informatisé PC2 n'aura pas à gérer une multitude de paquets transférés séquentiellement directement après leur vérification, ce qui représente une amélioration notable par rapport à l'art antérieur mentionné précédemment.

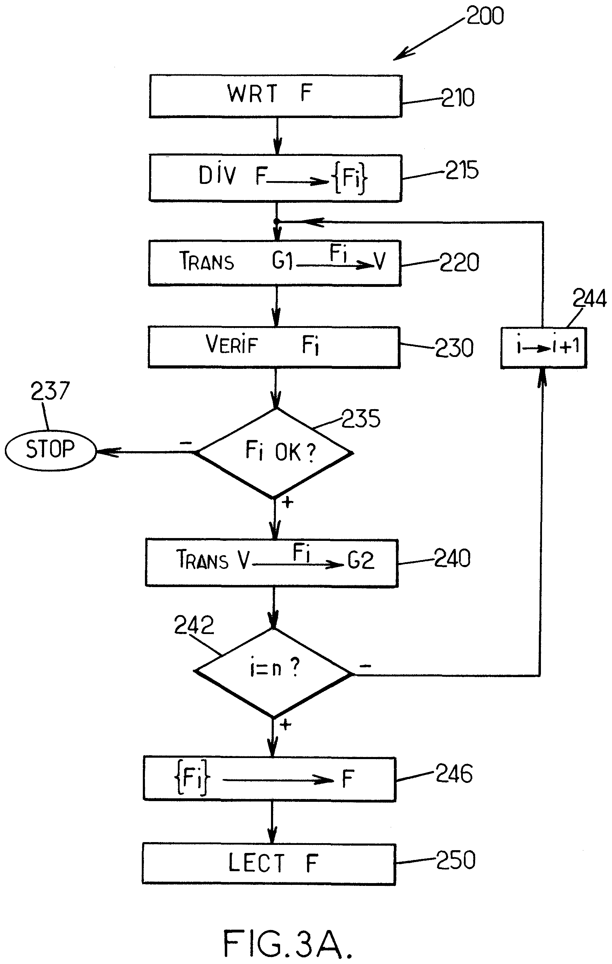

On se réfère maintenant à la **figure 3A** qui illustre un procédé 200 de transfert sécurisé d'un fichier numérique F selon un premier mode de réalisation de l'invention.

Dans ce premier mode de réalisation, la vérification est dite de type « de premier niveau » ou « individuelle », car elle est effectuée sur chacun des paquets Fᵢ d'un ensemble de n paquets de données {Fᵢ}_{1≤i≤n} correspondant à la décomposition du fichier numérique F à transférer.

Le procédé 200 comprend donc une première étape 210 d'écriture du fichier numérique F sur un premier module de gestion de fichiers G1 d'un dispositif de transfert sécurisé DISP, similairement à l'étape 110 décrite ci-avant.

Suite au dépôt de ce fichier numérique F sur ce premier module de gestion de fichiers G1, le procédé 200 comprend une étape 215 de décomposition de ce fichier numérique F en un ensemble de n paquets de données {Fᵢ}_{1≤i≤n}, de sorte à pouvoir effectuer une vérification portant sur au moins un de ces paquets de données. Ces paquets Fᵢ ont une présente une taille inférieure à une taille maximale de paquets données permettant le transfert vers le module de vérification, par exemple en fonction de la taille de l'interface physique permettant ce transfert.

Certains de ces paquets peuvent contenir des méta-informations destinées au module suivant (par exemple la taille du fichier, son nom, son extension, son numéro d'ordre, etc.), avec ou sans partie du fichier original, comme cela peut être le cas quand on utilise un marqueur de début et/ou de fin de fichier contenant ces méta-informations.

Un premier paquet F₁ est ensuite transféré (étape 220) vers un module de vérification V interne au dispositif de transfert sécurisé DISP, afin que celui-ci procède à une vérification de « premier niveau » sur ce paquet F₁, autrement appelée vérification « individuelle » dans la mesure où elle est effectuée sur un seul paquet.

Cette vérification peut consister, par exemple, à vérifier que tous les caractères du paquet F₁ analysé appartiennent à un alphabet limité de caractères possibles. La présence d'un seul caractère n'appartenant à cet alphabet entraine alors un résultat négatif pour cette vérification.

Dans ce premier mode de réalisation, si le résultat de la vérification est négatif (étape 235), alors le paquet F₁ n'est pas transféré plus avant dans le dispositif de transfert sécurisé DISP (étape 237), ce qui interrompt le transfert du fichier numérique F.

Si par contre le résultat de la vérification est positif (étape 235), alors le paquet F₁ est transféré vers un deuxième module de gestion de fichiers G2 du dispositif de transfert sécurisé DISP, accessible au deuxième système informatisé PC2.

Ainsi, tant que le résultat de la vérification est positif, les étapes 220 à 240 sont ensuite répétées séquentiellement pour chaque paquet Fᵢ jusqu'au dernier paquet Fₙ, comme indiqué par la boucle d'incrémentation (étapes 242 et 244) représentée sur la figure 3A. Si, par contre, l'un des paquets Fᵢ donne un résultat négatif au cours de l'étape 230 de vérification, le transfert du fichier numérique F est interrompu à ce stade (étape 237) et ce fichier numérique F ne devient pas accessible au deuxième système informatisé puisqu'il se n'est pas complètement transféré au deuxième module de gestion de fichiers G2. Dans un tel cas, un signal spécifique comme par exemple une méta-information peut être envoyé au module de gestion de fichiers G2 pour indiquer que le fichier F est invalide et qu'il doit être ignoré et/ou supprimé

Si le procédé parvient, après n-1 itérations avec résultat de vérification positif, au dernier paquet Fₙ, et si ce dernier paquet Fₙ est également vérifié de façon positive lors de létape 230 qui le concerne, le procédé 200 se poursuit par une étape 246 de recomposition du fichier numérique F dans le module de gestion de fichiers G2, par exemple par concaténation séquentielle des fichiers Fᵢ provenant du module de vérification, de sorte que F= F₁∥...∥Fᵢ∥...∥Fₙ.

Dans ce cas, chacun des paquets Fᵢ du fichier numérique F ayant été vérifié individuellement, le fichier numérique F est vérifié par paquets et peut donc être lu, au cours d'une dernière étape 250 de lecture, par le deuxième système informatisé PC2.

Ce procédé selon un premier mode de réalisation est avantageux lorsque le deuxième système informatisé, vers lequel on désire transférer le fichier numérique F, ne dispose que d'un degré limité d'autonomie et d'analyse des fichiers reçus, le filtrage des fichiers potentiellement nuisibles se faisant dans le dispositif de transfert sécurisé lui-même. Dans la mesure où, avec le procédé selon un premier mode de réalisation, ce deuxième système informatisé n'a accès qu'à des fichiers numériques intégralement vérifiés et validés, il n'est pas nécessaire d'ajouter des éléments de décision et de filtrage/suppression des fichiers numériques potentiellement nuisibles dans ce deuxième système informatisé. Le deuxième système informatisé peut alors effectuer des vérifications plus simplistes ou d'une autre nature telle que la vérification de signatures numériques, revérifier le nom des fichiers, vérifier les extensions, faire une gestion de « versionning », etc.

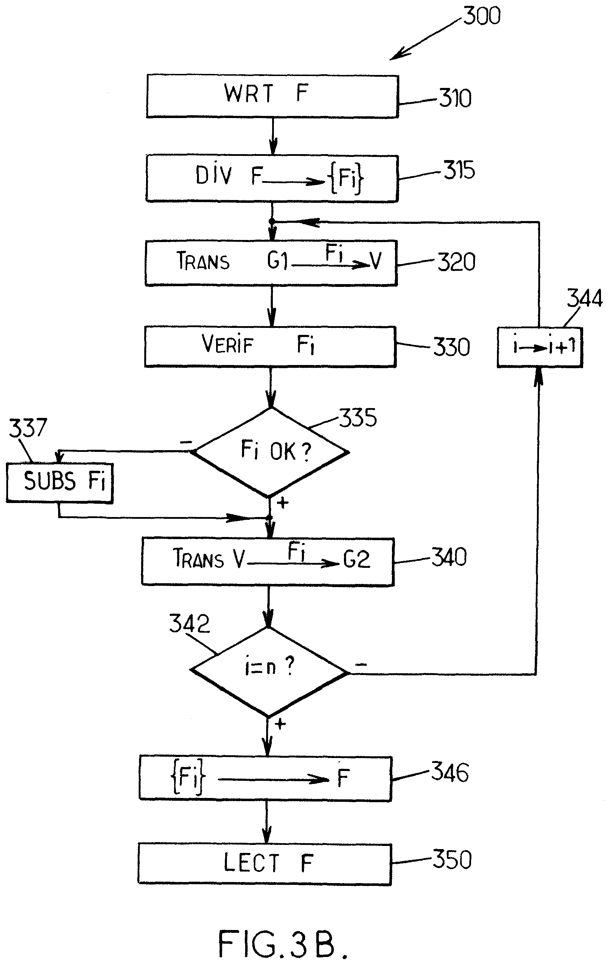

On se réfère maintenant à la **figure 3B** qui illustre un procédé 300 de transfert sécurisé d'un fichier numérique F selon une variante du premier mode de réalisation de l'invention.

Dans cette variante du premier mode de réalisation, le procédé 300 comprend des étapes 310 à 350 respectivement similaires aux étapes 210 à 250 décrites ci-avant en relation avec la figure 3A, à l'exception de l'étape 337 s'appliquant en cas de résultat négatif de la vérification individuelle des paquets de données Fᵢ transmis séquentiellement.

Dans cette variante, si l'étape 330 de vérification d'un paquet de données Fᵢ donne un résultat négatif, le paquet Fᵢ en question est transformé par un paquet de substitution Fᵢ' en substituant une partie, voire l'ensemble, de ses caractères par des caractères de substitution spécifiques, lors d'une étape 337 de substitution, avant d'être transmis (étape 340) au deuxième module de gestion G2 d'un dispositif de transfert sécurisé.

Le paquet de substitution présente ainsi une forme indicatrice du résultat négatif de la vérification, pouvant être reconnue comme telle par le deuxième système informatisé afin que ce dernier puisse détecter qu'une partie au moins du fichier numérique F' lu sur le deuxième module de gestion G2 présente une vérification ayant donné un résultat négatif.

Par exemple, les caractères de substitution peuvent prendre la forme d'une suite de caractères «_».

Ainsi, dans cette variante, tous les paquets de données Fᵢ sont systématiquement transmis, après vérification et en séquence, au deuxième module de gestion G2, contrairement au mode de réalisation illustré précédemment à la figure 3A dans lequel le transfert des paquets de données Fᵢ est interrompu dès que l'un de ces paquets Fᵢ amène un résultat négatif lors de sa vérification individuelle.

Il découle de cette variante que le fichier numérique F peut toujours être recomposé dans le deuxième module de gestion G2, puisque tous les paquets Fᵢ le composant sont systématiquement transférés vers ce module de gestion, et donc que le fichier numérique F' est disponible, après vérification individuelle de chacun de ses paquets, pour lecture par le deuxième système informatisé PC2.

Cette variante du procédé selon un premier mode de réalisation est avantageuse lorsque le système informatisé vers lequel on désire transférer le fichier numérique dispose d'un certain degré d'autonomie et d'analyse des fichiers reçus, et est capable de gérer lui-même des fichiers numériques dont les éléments pouvant représenter un risque ont été rendus inoffensifs, en les détectant grâce aux données de substitution insérées par le procédé de la présente invention et en les supprimant éventuellement ou en tenant un journal d'événements dans lequel est notée l'arrivée d'un tel fichier numérique potentiellement nocif.

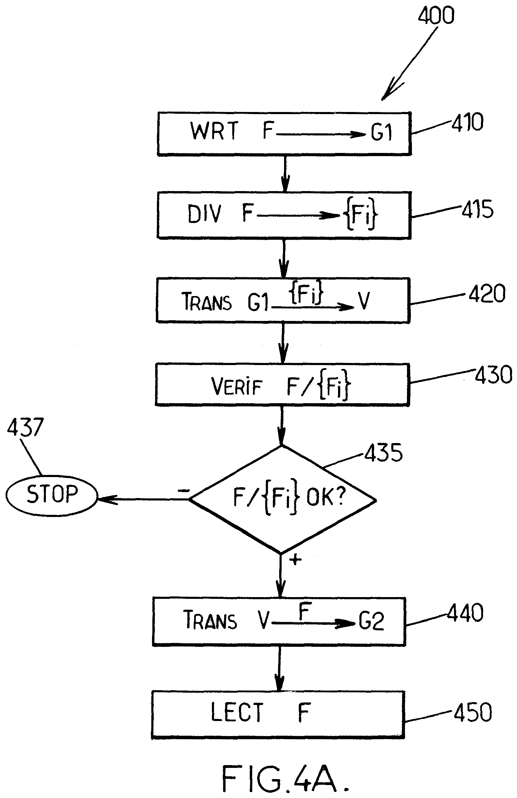

On se réfère maintenant à la **figure 4A** qui illustre un procédé 300 de transfert sécurisé d'un fichier numérique F selon un deuxième mode de réalisation de l'invention.

Dans ce deuxième mode de réalisation, la vérification est de type « de deuxième niveau », pour se distinguer de la vérification individuelle de premier niveau décrite aux figures 3A et 3B, dans la mesure où cette vérification est effectuée sur au moins une partie du fichier numérique F à transférer correspondant à plusieurs paquets de données, voire l'ensemble, de ce fichier numérique.

A ce titre, le procédé 400 comprend une première étape 410 d'écriture du fichier numérique F sur un premier module de gestion de fichiers G1 d'un dispositif de transfert sécurisé DISP, similairement à l'étape 110 décrite ci-avant.

Suite au dépôt de ce fichier numérique F sur ce premier module de gestion de fichiers G1, le procédé 400 comprend une étape 415 de décomposition de ce fichier numérique F en un ensemble de n paquets de données {Fᵢ}_{1≤i≤n}, similaire à l'étape 215 ci-avant.

Les n paquets de données Fᵢ sont ensuite transférés (étape 420) vers un module de vérification V interne au dispositif de transfert sécurisé DISP, afin d'y effectuer une étape 430 de vérification.

Contrairement à la vérification individuelle des paquets du premier mode de réalisation décrites aux figures 3A et 3B, la vérification du deuxième mode de réalisation est effectuée sur un ensemble de paquets de données Fᵢ parmi les paquets transférés, voire sur la totalité des paquets transférés, c'est-à-dire sur le fichier numérique recomposé à partir de la totalité des paquets transférés.

En particulier, cette vérification de deuxième niveau peut être désignée comme étant une vérification « intermédiaire » si elle porte sur une pluralité de paquets de données parmi les paquets de données transférés et cette vérification peut être désignée comme étant une vérification dite « globale » si elle porte sur tous les paquets de données transférés dans le deuxième sous-module de vérification.

A titre d'exemple, une telle vérification de deuxième niveau peut alors prendre les formes suivantes :
- si un ensemble de paquets Fᵢ correspondant à une ligne du fichier numérique F sont vérifiés ensemble, ce qui correspond à une vérification intermédiaire, on peut vérifier la présence d'un caractère spécifique correspondant à un retour de ligne à la fin de cet ensemble de paquets ou le respect d'un motif de ligne spécifique. En l'absence d'un tel caractère spécifique, ou si le motif de ligne spécifique n'est pas respecté, le résultat de cette vérification de deuxième niveau est négatif.
- si l'ensemble du fichier numérique F est recomposé pour être analysé entièrement, ce qui correspond à une vérification globale, la vérification peut alors consister à vérifier la présence d'une signature bien spécifique. En l'absence d'une telle signature spécifique, le résultat de cette vérification de deuxième niveau est négatif.
- toujours si l'ensemble du fichier numérique F est recomposé pour être analysé entièrement (vérification globale du fichier), la vérification peut porter sur le format de données du fichier afin de vérifier que ce format correspond bien à un type de fichier pouvant être transféré. Une telle vérification peut être faite au moyen de « magie numbers », par contrôle de l'entête du fichier F pour vérifier un type d'encodage particulier (par exemple l'encodage UTF8 : BOM UTF-8) ou en contrôlant les premiers caractères du fichier F indicatifs du type de fichier dans certains cas (GIF, JPEG, etc.).

Si le résultat de cette vérification de deuxième niveau est négatif (étape 435), c'est-à-dire si l'ensemble de paquets vérifié n'est pas validé lors de l'étape de vérification, alors le procédé 400 de transfert sécurisé est interrompu à ce stade (étape 437) et le fichier numérique F ne devient pas accessible au deuxième système informatisé puisqu'aucun de ses paquets de données Fᵢ n'est transféré au deuxième module de gestion de fichiers G2.

A contrario, si le résultat de cette vérification de type « globale » est positif (étape 435), c'est-à-dire si l'ensemble de paquets vérifié est validé lors de l'étape de vérification, alors le procédé 400 de transfert sécurisé se poursuit par le transfert (étape 440) du fichier numérique F vers le deuxième module de gestion de fichiers G2 via un ensemble de n paquets de données {Fᵢ}_{1≤i≤n} correspondant à la décomposition du fichier numérique F à transférer.

Certains de ces paquets Fᵢ peuvent contenir des méta-informations destinées au module suivant (par exemple la taille du fichier, son nom, son extension, son numéro d'ordre, etc.), avec ou sans partie du fichier original, comme cela peut être le cas quand on utilise par exemple un marqueur de début et/ou de fin de fichier contenant de telles méta-informations.

Dans un mode de réalisation avantageux, le module de vérification dispose de moyens de stockage temporaire (par exemple de type RAM) permettant le stockage des paquets Fᵢ reçus du premier module de gestion G1 et vérifiés dans le module de vérification, ainsi que leur rassemblement, après la vérification 430, pour reformer le fichier numérique F au niveau du module de vérification V. Dans un tel cas, c'est le fichier numérique F lui-même qui est transféré lors de l'étape 440 de transfert.

Ce dernier mode de réalisation est avantageux dans la mesure où il permet d'effectuer une vérification de type « globale » sur le fichier numérique F lui-même (comme par exemple la vérification d'une signature du fichier) tout en effectuant un transfert du fichier numérique par paquets, afin de tenir compte par exemple des contraintes de capacité de l'interface physique situé entre le premier module de gestion G1 et le module de validation V, et symétriquement entre V et G2.

Ainsi, dans ce mode de réalisation, le fichier numérique F est reçu tel quel et stocké par le deuxième module de gestion G2, s'il est validé lors de l'étape de vérification 430, afin de permettre sa lecture par le deuxième système informatisé.

Dans une autre alternative où le module de vérification ne dispose pas de tels moyens de stockage temporaire, l'ensemble des paquets Fᵢ reçus du premier module de gestion G1 sont transférés au deuxième module de gestion G2 lors de l'étape 440 de transfert, après la validation d'au moins une pluralité de ces paquets, voire de l'ensemble des paquets, lors de l'étape 430 de vérification.

Dans cette alternative, les paquets de données Fᵢ reçus par le deuxième module de gestion G2 sont rassemblés par ce dernier afin de reconstituer le fichier numérique F et de mettre ce fichier à disposition du deuxième système informatisé.

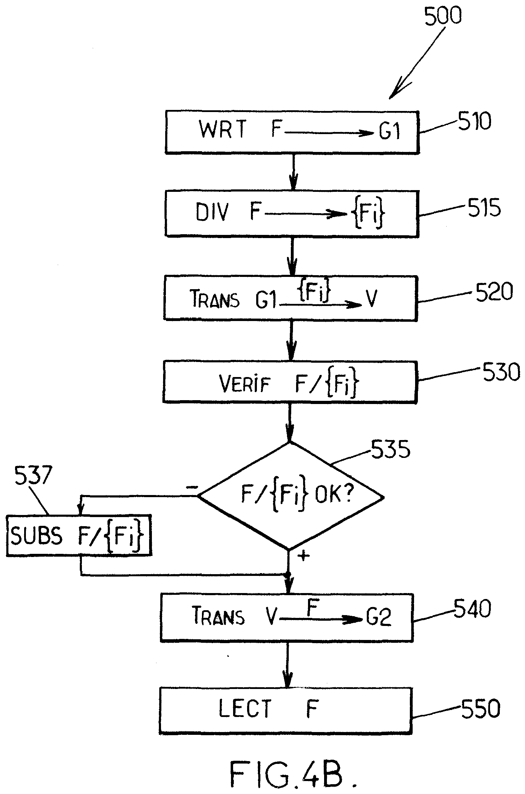

On se réfère maintenant à la **figure 4B** qui illustre un procédé 500 de transfert sécurisé d'un fichier numérique F selon une variante du deuxième mode de réalisation de l'invention.

De façon similaire à ce qui distingue la variante du premier mode de réalisation décrite à la figure 3B du premier mode de réalisation décrit à la figure 3A, le procédé 500 comprend des étapes 510 à 550 respectivement similaires aux étapes 410 à 450 décrites ci-avant en relation avec la figure 4A, à l'exception de l'étape 537 s'appliquant en cas de résultat négatif de la vérification (étape 530) d'un ensemble de paquets parmi les paquets de données Fᵢ transférés du premier module de gestion G1 au module de vérification.

Dans cette variante, si l'étape 530 de vérification d'un ensemble de paquets de données Fᵢ, voire de l'ensemble du fichier numérique F, donne un résultat négatif, l'ensemble de paquets Fᵢ en question est remplacé par des données de substitution, lors d'une étape 537 de substitution, avant d'être transmis (étape 540) au deuxième module de gestion G2 d'un dispositif de transfert sécurisé.

Les données de substitution présentent une forme indicatrice du résultat négatif de la vérification et pouvant être reconnue comme telle par le deuxième système informatisé, afin que ce dernier puisse détecter que le fichier numérique F' lu sur le deuxième module de gestion G2 n'a pas été validé lors du processus de vérification.

Par exemple, les données de substitution peuvent prendre la forme de caractères «_».

Ainsi, dans cette variante, le fichier numérique F est systématiquement transmis, après vérification, au deuxième module de gestion G2, contrairement au mode de réalisation illustré précédemment à la figure 4A dans lequel le transfert par paquets du fichier numérique F est interrompu dès que la vérification effectuée sur un ensemble de paquets Fᵢ, ou sur le fichier numérique dans sa totalité, présente un résultat négatif.

Il découle de cette variante que le fichier numérique F' est toujours disponible, après vérification au moins partielle de ce fichier numérique, pour lecture par le deuxième système informatisé PC2.

Tout comme pour la variante illustrée à la figure 3B, cette variante du procédé selon un deuxième mode de réalisation est avantageuse lorsque le deuxième système informatisé, vers lequel on désire transférer le fichier numérique, dispose d'un certain degré d'autonomie et de capacités d'analyse des fichiers reçus, et est capable de gérer lui-même des fichiers numériques potentiellement nocifs, en les détectant grâce aux données de substitution.

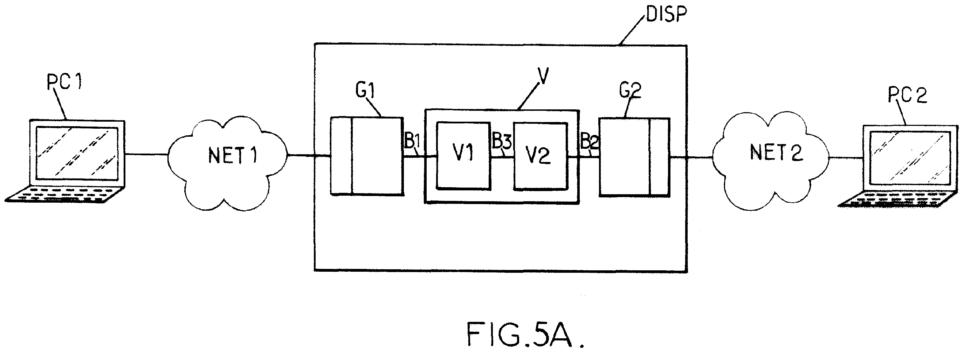

On se réfère maintenant à la **figure 5A** sur laquelle est illustré schématiquement un dispositif de transfert sécurisé DISP' selon un autre mode de réalisation de la présente invention.

Dans cet autre mode de réalisation, on cherche à offrir un double niveau de vérification lors du transfert sécurisé d'un fichier numérique dans ce dispositif DISP'.

En ce sens, le dispositif de transfert sécurisé DISP' comprend un premier module de gestion de fichiers G1 et un deuxième module de gestion de fichiers G2 similaires à ceux du dispositif de transfert sécurisé DISP décrit à la figure 1.

Tout comme le dispositif de transfert sécurisé DISP décrit à la figure 1, le dispositif de transfert sécurisé DISP' comprend un module de vérification V, qui se distingue cependant en ce qu'il comporte un premier sous-module de vérification V1 et un deuxième sous-module de vérification V2.

Le premier sous-module de vérification V1 est arrangé pour recevoir au moins un paquets de données obtenus dans le premier module de gestion de fichiers G1 et pour effectuer une première vérification individuelle portant sur chacun des paquets de données Fᵢ transférés depuis le premier module de gestion de fichiers G1, à la manière de ce qui est décrit au sujet des procédés de transfert sécurisé 200 et 300 illustrés aux figures 3A et 3B.

Le deuxième sous-module de vérification V2 est apte à recevoir au moins un paquet de données vérifié individuellement par le premier sous-module de vérification, par l'intermédiaire d'une interface physique B3 de type bus mémoire, et est arrangé pour effectuer une deuxième vérification portant sur au moins un des paquets de données reçus du premier sous-module de vérification.

Il est ainsi possible d'offrir un double niveau de vérification permettant de renforcer la sécurisation du transfert de données.

Dans un premier mode de réalisation, la vérification effectuée dans le deuxième sous-module de vérification V2 peut être de même niveau que celle effectuée dans le premier sous-module de vérification V1 c'est-à-dire qu'elle peut être de type individuelle et s'effectuer paquets par paquets, en utilisant cependant des critères de vérification différents de ceux employés lors de la première vérification.

Dans un autre mode de réalisation avantageux, la vérification effectuée dans le deuxième sous-module de vérification V2 est faite à un niveau différent, plus large, de celle effectuée dans le premier sous-module de vérification V1, c'est-à-dire qu'elle porte non pas sur un seul paquet de données, mais sur un ensemble de paquets de données, ce qui permet de détecter une palette plus large de défauts potentiels dans ce fichier numérique F.

Dans cet autre mode de réalisation avantageux, le deuxième sous-module de vérification V2 est alors apte à recevoir tous les paquets de données vérifiés par le premier sous-module de vérification et est arrangé pour effectuer une deuxième vérification (de deuxième niveau) portant sur plusieurs paquets parmi les paquets de données Fᵢ transférés reçus du premier sous-module de vérification V1, à la manière de ce qui est décrit au sujet des procédés de transfert sécurisé 400 et 500 illustrés aux figures 4A et 4B et que l'on désigne ici par vérification intermédiaire. Il est alors possible d'appliquer deux niveaux différents de vérification aux données à transférer afin de mieux sécuriser le transfert.

Dans un autre mode réalisation particulièrement avantageux où le deuxième sous-module de vérification V2 est apte à recevoir tous les paquets de données vérifiés par le premier sous-module de vérification, le deuxième sous-module de vérification V2 est arrangé pour effectuer une deuxième vérification (de deuxième niveau) portant sur l'ensemble des paquets de données Fᵢ reçus du premier sous-module de vérification V1, toujours à la manière de ce qui est décrit au sujet des procédés de transfert sécurisé 400 et 500 illustrés aux figures 4A et 4B et que l'on désigne ici par vérification globale. Il est ainsi possible de combiner une vérification individuelle par paquets avec une vérification globale portant sur l'ensemble du fichier à transmettre afin de mieux sécuriser le transfert de ce fichier.

Dans un mode de réalisation avantageux, le deuxième sous-module de vérification V2 dispose de moyens de stockage temporaire (par exemple de type RAM) permettant le stockage des paquets Fᵢ vérifiés et reçus du premier sous-module de vérification V1, ainsi que leur rassemblement pour reformer le fichier numérique F au niveau du deuxième sous-module de vérification V2, ce qui permet de transférer le fichier numérique F lui-même au deuxième module de gestion de fichiers G2.

Ce mode de réalisation est avantageux dans la mesure où il permet d'effectuer une vérification « globale » sur le fichier numérique F lui-même (comme par exemple la vérification d'une signature sur l'ensemble du fichier numérique F) tout en effectuant un transfert du fichier numérique par paquets entre le premier module de gestion G1 et le deuxième sous-module de vérification V2, afin de tenir compte par exemple des contraintes de capacité des interfaces physiques B1 et B3 situées entre ces deux éléments.

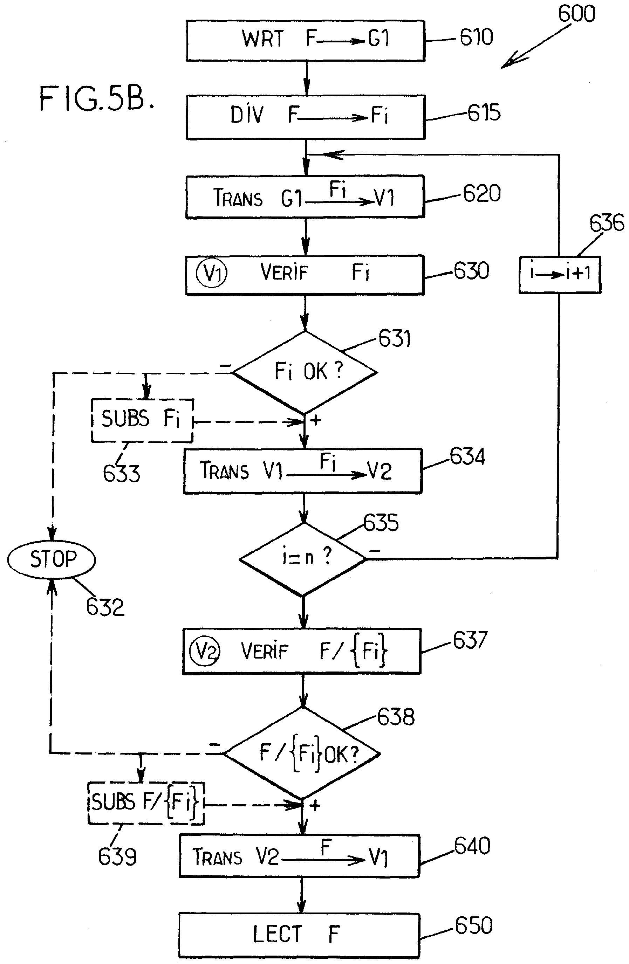

La **figure 5B** illustre un procédé 600 de transfert sécurisé selon un troisième mode de réalisation de l'invention, lequel est applicable en particulier au dispositif de transfert sécurisé DISP' décrit à la figure 5A.

Dans ce troisième mode de réalisation, les avantages des procédés selon un premier et un deuxième mode de réalisation tels que décrits ci-avant aux figures 3A, 3B, 4A et 4B sont combinés.

Le procédé 600 comprend ainsi une première étape 610 d'écriture du fichier numérique F sur un premier module de gestion de fichiers G1 d'un dispositif de transfert sécurisé DISP' tel que décrit en figure 5A, similairement à l'étape 110 décrite ci-avant.

Suite au dépôt de ce fichier numérique F sur ce premier module de gestion de fichiers G1, le procédé 600 comprend une étape 615 de décomposition de ce fichier numérique F en un ensemble de n paquets de données {Fᵢ}_{1≤i≤n}.

Un premier paquet F₁ est ensuite transféré (étape 620) vers le premier sous-module de vérification V1 interne au dispositif de transfert sécurisé DISP', afin que celui-ci procède à une première vérification individuelle, de premier niveau, sur ce paquet F₁ lors de l'étape 630 de vérification.

Tout comme pour le procédé 200 illustré à la figure 3A, cette première vérification individuelle peut consister à vérifier que tous les caractères du paquet F₁ appartiennent à un alphabet déterminé.

Si le résultat de la première vérification est négatif (étape 631), deux options sont alors possibles, de façon similaire aux options décrites respectivement aux figures 3A et 3B :
- soit le paquet F₁ n'est pas transféré plus avant dans le dispositif de transfert sécurisé DISP' (étape 632), ce qui empêche le transfert du fichier numérique F dans ce dispositif, et le procédé 600 de transfert est interrompu ;
- soit le paquet F₁ est remplacé par un paquet de substitution F₁' comme décrit précédemment, lors d'une étape 633 de substitution, avant d'être transmis (étape 634) au deuxième sous-module de vérification V2 du dispositif de transfert sécurisé DISP'.

Si par contre le résultat de la première vérification est positif (étape 631), alors le paquet F₁ est transféré (étape 634) vers le deuxième sous-module de vérification V2 du dispositif de transfert sécurisé DISP'.

Tant que le résultat de la première vérification individuelle par paquets est positif, les étapes 620 à 634 sont ensuite répétées séquentiellement pour chaque paquet Fᵢ jusqu'au dernier paquet Fₙ, comme indiqué par la boucle d'incrémentation (étapes 635 et 636) représentée sur la figure 5B.

Si l'un des paquets Fᵢ donne un résultat négatif au cours de l'étape 630 de vérification, il y a soit interruption à ce stade (étape 633) du procédé 600 et le fichier numérique F' ne devient pas accessible au deuxième système informatisé puisqu'il n'est pas complètement transféré au deuxième sous-module de vérification V2, soit substitution (étape 632) du paquet de données Fᵢ incriminé par un paquet de substitution.

Si le procédé 600 parvient, après n-1 itérations avec des résultats de vérification positifs lors de l'étape 630, au dernier paquet Fₙ, et si ce dernier paquet Fₙ est également vérifié de façon positive lors d'étape 630 qui le concerne, le procédé 600 se poursuit par une deuxième vérification de deuxième niveau (étape 637), portant sur certains, voire l'ensemble, des paquets Fᵢ reçus par le deuxième sous-module de vérification V2, de façon similaire à ce qui est décrit aux figures 4A et 4B.

Tout comme pour la vérification de deuxième niveau décrite aux figures 4A et 4B, cette deuxième vérification peut consister en à rechercher un caractère spécifique de retour à la ligne, vérifier l'appartenance à un certain type de fichiers, voire vérifier la signature du fichier, etc.

Si le résultat de cette deuxième vérification est positif (étape 638), c'est-à-dire si l'ensemble de paquets vérifiés est validé lors de l'étape de vérification 637, alors le procédé 600 de transfert sécurisé se poursuit par le transfert (étape 640) du fichier numérique F vers le deuxième module de gestion de fichiers G2, soit sous la forme du fichier numérique F lui-même (recomposé, par exemple par concaténation, à partir des n paquets Fᵢ dans le deuxième sous-module de vérification), soit sous la forme de paquets Fᵢ auquel cas le fichier numérique F est recomposé, par exemple par concaténation, dans le deuxième module de gestion de fichiers G2.

Dans ces deux cas de figures, le fichier numérique F est intégralement récupéré dans le deuxième sous-module de gestion de fichiers G2 où il est disponible en lecture (étape 650) pour le deuxième système informatisé.

A contrario, si le résultat de cette deuxième vérification est négatif (étape 638), c'est-à-dire si l'ensemble de paquets vérifiés n'est pas validé lors de l'étape de vérification 637, deux options sont alors possibles, de façon similaire aux options décrites respectivement aux figures 4A et 4B :
- soit le procédé 600 de transfert sécurisé est interrompu à ce stade (étape 632) et le fichier numérique F ne devient pas accessible au deuxième système informatisé puisqu'aucun de ses paquets de données Fᵢ n'est transféré au deuxième module de gestion de fichiers G2 ;
- soit l'ensemble de paquets vérifiés est remplacé par des données de substitution (étape 639), comme décrit précédemment au sujet de l'étape 537 de la figure 4B, avant d'être transmis (étape 640) au deuxième module de gestion de fichiers G2 du dispositif de transfert sécurisé DISP'.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

En particulier, des modes de réalisation illustratifs décrivant soit une vérification de premier niveau, individuelle, sur des paquets seulement, soit une vérification de deuxième niveau, plus large, sur des ensembles de paquets ou sur l'ensemble du fichier numérique, soit la combinaison de ces deux types de vérifications, ont été décrits précédemment.

L'invention ne se limite cependant pas à ces seuls modes de réalisation illustratifs et recouvre également toute combinaison de différents niveaux de vérification.

On peut ainsi très bien imaginer un dispositif disposant de trois sous-modules de vérification afin d'effectuer la vérification respectivement sur trois niveaux distincts :
- un premier niveau où les paquets de données Fᵢ sont vérifiés séquentiellement et individuellement, similairement à ce qui est décrit aux figures 3A et 3B ;
- un deuxième niveau intermédiaire où des ensembles de paquets de données Fᵢ correspondant à des lignes du fichier numérique F sont rassemblés afin d'effectuer une vérification par ligne, selon le principe décrit aux figures 4A et 4B ;
- un troisième niveau global, enfin, où l'ensemble du fichier numérique F est recomposé à partir des paquets de données Fᵢ et vérifié de façon globale, par exemple au moyen de la vérification d'une signature appliquée au fichier numérique.

## Revendications

1. Procédé de transfert sécurisé d'un fichier numérique (F) provenant d'un premier système informatisé vers au moins un deuxième système informatisé via un dispositif de transfert sécurisé, comprenant :
- l'écriture (110) du fichier numérique sur un premier module de gestion de fichiers (G1) du dispositif de transfert sécurisé (DISP), ledit premier module de gestion de fichiers étant apte à stocker ledit fichier numérique reçu du premier système informatisé ;
- le transfert (120) du fichier numérique vers un module de vérification (V) interne au dispositif de transfert sécurisé ;
- la vérification (130) d'au moins une partie du fichier numérique transféré dans le module de vérification ;
- le transfert (140) du fichier numérique au moins partiellement vérifié vers un deuxième module de gestion de fichiers (G2) du dispositif de transfert sécurisé en fonction du résultat de ladite vérification ;
comprenant en outre une étape de mise en forme (215) du fichier numérique écrit sur le premier module de gestion de fichiers comprenant la division dudit fichier numérique en une pluralité de paquets de données (Fᵢ) de taille inférieure à une taille maximale de paquets de données permettant le transfert vers le module de vérification, la vérification portant sur au moins un desdits paquets de données ;
dans lequel le module de vérification comprend un premier sous-module de vérification (V1), l'étape de transfert comprenant le transfert (620) d'au moins un desdits paquets de données vers le premier sous-module de vérification et l'étape de vérification comprenant une première vérification individuelle (630) portant sur chacun desdits paquets transférés dans le premier sous-module de vérification ;
dans lequel le module de vérification comprend en outre un deuxième sous-module de vérification (V2), **caractérisé en ce que** l'étape de vérification comprend en outre le transfert (634) d'au moins un des paquets de données vérifiés individuellement dans le premier sous-module de vérification vers le deuxième sous-module de vérification et une deuxième vérification (637) portant sur au moins un des paquets de données transférés dans le deuxième sous-module de vérification.

2. Procédé de transfert sécurisé selon la revendication 1, dans lequel tous les paquets de données vérifiés individuellement sont transférés vers le deuxième sous-module de vérification, **caractérisé en ce que** la deuxième vérification est une vérification intermédiaire portant sur une pluralité de paquets de données parmi les paquets de données transférés dans le deuxième sous-module de vérification.

3. Procédé de transfert sécurisé selon la revendication 1, dans lequel tous les paquets de données vérifiés individuellement sont transférés vers le deuxième sous-module de vérification, **caractérisé en ce que** la deuxième vérification est une vérification globale portant sur tous les paquets de données transférés dans le deuxième sous-module de vérification.

4. Procédé de transfert sécurisé selon l'une des revendications 1 à 3, **caractérisé en ce que**, si le résultat de la vérification individuelle d'un desdits paquets reçus par le premier sous-module de vérification et/ou de la deuxième vérification est négatif, le transfert des paquets de données est interrompu (237,632).

5. Procédé de transfert sécurisé selon l'une des revendications 1 à 3, **caractérisé en ce que**, si le résultat de la vérification individuelle d'un desdits paquets reçus par le premier sous-module de vérification est négatif, le paquet de données dont la vérification donne un résultat négatif est remplacé par un paquet de données de substitution (337,639).

6. Dispositif de transfert sécurisé de données apte à être connecté à un premier système informatisé et un deuxième système informatisé, comprenant :
- un premier module de gestion de fichiers (G1) apte à stocker un fichier numérique (F) reçu du premier système informatisé ;
- un module de vérification (V) arrangé pour recevoir le fichier numérique stocké sur le premier module de gestion de fichiers et pour effectuer une vérification sur au moins une partie du fichier numérique reçu ;
- un deuxième module de gestion de fichiers (G2) apte à recevoir le fichier numérique du module de vérification ;
dans lequel le premier module de gestion de fichiers est connecté au module de vérification par l'intermédiaire d'une interface physique (B1), le premier module de gestion de fichiers étant arrangé pour diviser le fichier numérique en une pluralité de paquets de données (Fᵢ) de taille inférieure à une taille maximale de données pouvant être transférés sur ladite interface physique, le module de vérification étant arrangé pour effectuer une vérification sur au moins un desdits paquets de données (Fᵢ) ;
le module de vérification comporte un premier sous-module de vérification (V1) arrangé pour recevoir au moins un des paquets de données (Fᵢ) obtenus dans le premier module de gestion de fichiers et pour effectuer une première vérification individuelle portant sur chacun des paquets de données reçus ;
le module de vérification comporte en outre un deuxième sous-module de vérification (V2) apte à recevoir au moins un paquet de données vérifié individuellement dans le premier sous-module de vérification et arrangé pour effectuer une deuxième vérification portant sur au moins un paquet de données reçu du premier sous-module de vérification ;
le deuxième sous-module de vérification est arrangé pour transmettre au moins un paquet de données vérifié vers le deuxième module de gestion de fichiers en fonction du résultat de la deuxième vérification portant sur ledit au moins un paquet de données, et le deuxième module de gestion de fichiers est agencé pour recomposer le fichier numérique à partir des paquets de données vérifiés reçus du deuxième sous-module de vérification

7. Dispositif de transfert sécurisé selon la revendication 6, dans lequel le deuxième sous-module de vérification est apte à recevoir tous les paquets de données vérifiés individuellement dans le premier sous-module de vérification, **caractérisé en ce que** la deuxième vérification est une vérification intermédiaire portant sur une pluralité de paquets parmi les paquets de données reçus du premier sous-module de vérification.

8. Dispositif de transfert sécurisé selon la revendication 6, dans lequel le deuxième sous-module de vérification est apte à recevoir tous les paquets de données vérifiés individuellement dans le premier sous-module de vérification, **caractérisé en ce que** la deuxième vérification est une vérification globale portant sur tous les paquets de données reçus du premier sous-module de vérification.

## Patentansprüche

1. Verfahren zum sicheren Transfer einer digitalen Datei (F) aus einem ersten Computersystem zu mindestens einem zweiten Computersystem über eine sichere Transfervorrichtung, aufweisend:
- Schreiben (110) der digitalen Datei auf ein erstes Dateiverwaltungsmodul (G1) der sicheren Transfervorrichtung (DISP), wobei das erste Dateiverwaltungsmodul fähig ist, die aus dem ersten Computersystem empfangene digitale Datei zu speichern;
- Transferieren (120) der digitalen Datei zu einem Prüfmodul (V), das in der sicheren Transfervorrichtung enthalten ist;
- Prüfen (130) mindestens eines Teils der transferierten digitalen Datei in dem Prüfmodul;
- Transferieren (140) der mindestens teilweise geprüften digitalen Datei zu einem zweiten Dateiverwaltungsmodul (G2) der sicheren Transfervorrichtung in Abhängigkeit von dem Ergebnis der Prüfung;
aufweisend ferner einen Schritt des Umformens (215) der auf das erste Dateiverwaltungsmodul geschriebenen digitalen Datei aufweisend die Aufteilung der digitalen Datei in mehrere Datenpakete (Fᵢ), deren Größe kleiner ist als eine den Transfer zu dem Prüfmodul erlaubende maximale Datenpaketgröße, wobei die Prüfung auf mindestens einem der Datenpakete basiert;
in welchem das Prüfmodul ein erstes Prüfsubmodul (V1) aufweist, wobei der Transferschritt das Transferieren (620) mindestens eines der Datenpakete zu dem ersten Prüfsubmodul aufweist und der Prüfschritt eine erste Einzelprüfung (630) aufweist, die auf jedem der in das erste Prüfsubmodul transferierten Pakete basiert;
in welchem das Prüfmodul ferner ein zweites Prüfsubmodul (V2) aufweist,
**dadurch gekennzeichnet, dass** der Prüfschritt ferner aufweist: das Transferieren (634) mindestens eines der in dem ersten Prüfsubmodul einzeln geprüften Datenpakete zu dem zweiten Prüfsubmodul und eine zweite Prüfung (637), die auf mindestens einem der in das zweite Prüfsubmodul transferierten Datenpakete basiert.

2. Verfahren zum sicheren Transfer nach Anspruch 1, in welchem alle einzeln geprüften Datenpakete zu dem zweiten Prüfsubmodul transferiert werden, **dadurch gekennzeichnet, dass** die zweite Prüfung eine Zwischenprüfung ist, die auf mehreren Datenpaketen der in das zweite Prüfsubmodul transferierten Datenpakete basiert.

3. Verfahren zum sicheren Transfer nach Anspruch 1, in welchem alle einzeln geprüften Datenpakete zu dem zweiten Prüfsubmodul transferiert werden, **dadurch gekennzeichnet, dass** die zweite Prüfung eine Gesamtprüfung ist, die auf allen der in das zweite Prüfsubmodul transferierten Datenpaketen basiert.

4. Verfahren zum sicheren Transfer nach einem der Ansprüche 1 bis 3, **dadurch gekennzeichnet, dass** in dem Fall, dass das Ergebnis der Einzelprüfung eines der von dem ersten Prüfsubmodul empfangenen Pakete und/oder der zweiten Prüfung negativ ist, der Transfer der Datenpakete unterbrochen wird (237, 632).

5. Verfahren zum sicheren Transfer nach einem der Ansprüche 1 bis 3, **dadurch gekennzeichnet, dass** in dem Fall, dass das Ergebnis der Einzelprüfung eines der von dem ersten Prüfsubmodul empfangenen Pakete negativ ist, das Datenpaket, dessen Prüfung ein negatives Ergebnis liefert, durch ein Ersatzdatenpaket ersetzt wird (337, 639).

6. Vorrichtung zum sicheren Transfer zum sicheren Transferieren von Daten, die fähig ist, mit einem ersten Computersystem und einem zweiten Computersystem verbunden zu werden, aufweisend:
- ein erstes Dateiverwaltungsmodul (G1), das fähig ist, eine aus dem ersten Computersystem empfangene digitale Datei (F) zu speichern;
- ein Prüfmodul (V), das konfiguriert ist, um die auf dem ersten Dateiverwaltungsmodul gespeicherte digitale Datei zu empfangen und eine Prüfung an mindestens einem Teil der empfangenen digitalen Datei durchzuführen;
- ein zweites Dateiverwaltungsmodul (G2), das fähig ist, die digitale Datei des Prüfmoduls zu empfangen;
in welcher das erste Dateiverwaltungsmodul über eine physische Schnittstelle (B1) mit dem Prüfmodul verbunden ist, wobei das erste Dateiverwaltungsmodul konfiguriert ist, um die digitale Datei in mehrere Datenpakete (Fᵢ) aufzuteilen, deren Größe kleiner ist als eine maximale Datengröße, die auf der physischen Schnittstelle transferiert werden kann, wobei das Prüfmodul konfiguriert ist, um eine Prüfung an mindestens einem der Datenpakete (Fᵢ) durchzuführen;
wobei das Prüfmodul ein erstes Prüfsubmodul (V1) aufweist, das konfiguriert ist, um mindestens eines der in dem ersten Dateiverwaltungsmodul gewonnenen Datenpakete (Fᵢ) zu empfangen und eine erste Einzelprüfung, die auf jedem der empfangenen Datenpakete basiert, durchzuführen;
wobei das Prüfmodul ferner ein zweites Prüfsubmodul (V2) aufweist, das fähig ist, mindestens eines der in dem ersten Prüfsubmodul einzeln geprüften Datenpakete zu empfangen und eine zweite Prüfung durchzuführen, die auf mindestens einem aus dem ersten Prüfmodul empfangenen Datenpaket basiert;
wobei das zweite Prüfsubmodul konfiguriert ist, mindestens ein geprüftes Datenpaket in Abhängigkeit von dem Ergebnis der zweiten Prüfung, die auf dem mindestens einen Datenpaket basiert, zu dem zweiten Dateiverwaltungsmodul zu übertragen, und das zweite Dateiverwaltungsmodul konfiguriert ist, um ausgehend von den aus dem zweiten Prüfsubmodul empfangenen geprüften Datenpaketen die digitale Datei wieder zusammenzusetzen.

7. Vorrichtung zum sicheren Transfer nach Anspruch 6, in welcher das zweite Prüfsubmodul fähig ist, alle in dem ersten Prüfsubmodul einzeln geprüften Datenpakete zu empfangen, **dadurch gekennzeichnet, dass** die zweite Prüfung eine Zwischenprüfung ist, die auf mehreren Datenpaketen der aus dem ersten Prüfsubmodul empfangenen Datenpaketen basiert.

8. Vorrichtung zum sicheren Transfer nach Anspruch 6, in welcher das zweite Prüfsubmodul fähig ist, alle in dem ersten Prüfsubmodul einzeln geprüften Datenpakete zu empfangen, **dadurch gekennzeichnet, dass** die zweite Prüfung eine Gesamtprüfung ist, die auf allen aus dem ersten Prüfsubmodul empfangenen Datenpaketen basiert.

## Claims

1. Method of secure transfer of a digital file (F) originating from a first computerized system to at least one second computerized system via a secure transfer device, comprising:
- writing (110) the digital file on a first file management module (G1) of the secure transfer device (DISP), said first file management module being configured to store said digital file received from the first computerized system;
- transferring (120) the digital file to a verification module (V) module that is internal to the secure transfer device;
- verifying (130) at least part of the digital file transferred into the verification module;
- transferring (140) the at least partially verified digital file to a second file management module (G2) of the secure transfer device based on the result of said verification;
further comprising a step of formatting (215) the digital file written on the first file management module comprising dividing said digital file into a plurality of data packets (Fᵢ) having a size smaller than a maximum size of data packets allowed to be transferred to the verification module, the verification being performed on at least one of said data packets;
wherein the verification module comprises a first verification sub-module (V1), the step of transferring comprising transferring (620) at least one of said data packets to the first verification sub-module and the step of verifying comprising a first individual verification (630) performed on each of the data packets transferred into the first verification sub-module;
wherein the verification module further comprises a second verification sub-module (V2), **characterized in that** the step of verifying further comprises the transfer (634) of at least one of the data packets individually verified in the first verification sub-module to the second verification sub-module and a second verification (637) performed on at least one of the data packets transferred in the second verification sub-module.

2. Method of secure transfer according to claim 1, wherein all the individually verified data packets are transferred to the second verification sub-module, **characterized in that** the second verification is an intermediate verification performed on a plurality of data packets from among the data packets transferred into the second verification sub-module.

3. Method of secure transfer according to claim 1, wherein all the individually verified data packets are transferred to the second verification sub-module, **characterized in that** the second verification is a global verification performed on all the data packets transferred into the second verification sub-module.

4. Method of secure transfer according to any of claims 1 to 3, **characterized in that**, if the result of the individual verification of one of said packets received by the first verification sub-module and/or of the second verification is negative, the transfer of the data packets is interrupted (237, 632).

5. Method of secure transfer according to any of claims 1 to 3, **characterized in that**, if the result of the individual verification of one of said packets received by the first verification sub-module is negative, the data packet whose verification gives a negative result is replaced with a substitution data packet (337, 639).

6. Device for secure transfer of data able to be connected to a first computerized system and a second computerized system, comprising:
- a first file management module (G1) configured to store a digital file (F) received from the first computerized system;
- a verification module (V) configured to receive the digital file stored un the first file management module and to perform a verification on at least part of the digital file received;
- a second file management module (G2) configured to receive the digital file from the verification module;
wherein the first file management module is connected to the verification module by way of a physical interface (B1), the first file management module being configured to divide the digital file into a plurality of data packets (Fᵢ) having a size smaller than a maximum size permitted to be transferred on said physical interface, the verification module being configured to perform a verification on at least one data packets among said data packets (Fᵢ);
the verification module comprises a first verification sub-module (V1) configured to receive at least one of the obtained data packets (Fᵢ) in the first file management module and to perform a first individual verification on each of the received data packets;
the verification module further comprises a second verification sub-module (V2) configured to receive at least one data packet individually verified in the first verification sub-module and configured to perform a second verification on at least one data packet received from the first verification sub-module;
the second verification sub-module is configured to transmit at least one verified data packet to the second file management module based on the result of the second verification performed on said at least one data packet, and the second file management module is configured to reconstruct the digital file based on the verified data packets received from the second verification sub-module.

7. Device for secure transfer according to claim 6, wherein the second verification sub-module is configured to receive all the data packets verified individually in the first verification sub-module, **characterized in that** the second verification is an intermediate verification performed on a plurality of packets among the data packets received from the first verification sub-module.

8. Device for secure transfer according to claim 6, wherein the second verification sub-module is configured to receive all the data packets verified individually in the first verification sub-module, **characterized in that** the second verification is a global verification performed on all the data packets received from the first verification sub-module.
